# EUROPEAN PATENT APPLICATION

(11) **EP 1 994 864 A1**
(43) Date of publication of application: **26.11.2008**
(21) Application number: 08104007.3
(22) Date of filing: 19.05.2008
(51) Int. Cl.: A47J 37/04

(54) **Food cooking apparatus**

(30) Priority: 23.05.2007 IT VI20070149
(71) Applicant: Martini, Roberto, 36030 Lugo di Vicenza (Vicenza) (IT)
(72) Inventor: Martini, Roberto, 36030 Lugo di Vicenza (Vicenza) (IT)
(74) Representative: Bettello, Pietro

(57) **Abstract**

The finding regards a food cooking apparatus of the type similar to the "rotisserie" and to the "rotating-spit", for domestic and professiona- use; such apparatus is characterised in that the products to be cooked are arranged inside a basket (3) with perforated walls, rotating around its longitudinal axis, arranged opposite a source of heat (4). Both said components are arranged inside a box-shaped structure (2), which delimits the cooking oven and they are regulated through a control unit (5) arranged outside said structure.

## Description

The finding regards a food cooking apparatus, according to the general part of claim 1.

As well known, currently widely available in the market are food cooking apparatus, for domestic and professional use, of different structures but all of which are similar to a structure in which the product is cooked by the heat generated through a source of energy of different types (combustion, electric (due to the Joule effect or in a microwave) or through other systems of the known type).

A very common type of cooking apparatus is the so-called "rotisserie", in which the product to be cooked is arranged on a fixed or rotating grill.

A drawback revealed by such types of ovens lies in the fact that the product always exposes the same surface to the source of heat, especially in the case of the fixed grill, therefore lacking a regular and homogeneous cooking of the food.

Another very common cooking apparatus is the so-called "rotating-spit", in which the product to be cooked is put piece by piece into rods called spits, in order to be held and rotated in proximity to the source of heat.

A drawback revealed by this second type of cooking apparatus lies in the fact that the operation of preparing the food products put into the rods requires a considerable amount of time.

The objective of the present finding is to provide a cooking apparatus capable of ensuring a regular and uniform cooking of any kind of food, of vegetable or animal origin.

Further objective of the finding is that of providing a cooking apparatus capable of cooking different amounts of food - from a few grams of vegetables to some kilograms of meat or fish - in an ideal manner.

Further objective of the finding is that of providing a cooking apparatus which is easy to manufacture, easy to use and which allows a quick and perfect cleaning of the apparatus itself after cooking.

Further objective of the finding is that of providing a food cooking apparatus capable of allowing using a self-supplied condiment system for obtaining a cooked product with an ideal taste.

Such objectives are attained by means of a food cooking apparatus characterised in that the products to be cooked are arranged in a cylindrical or prism-shaped basket with perforated walls, rotating around its longitudinal axis and arranged opposite to a source of heat.

With such manufacturing solution the pieces of food held in the basket, due to the rotating effect of the same, preferably in an alternating manner in the two directions, are subjected to constant mixing, hence leading to new portions of the product to be touched by the heat, thus allowing to obtain the regular cooking of the entire amount of product.

The finding shall be understood better through the description of one of its possible embodiments, provided solely for exemplifying and non-limiting purposes, with the help of the drawings attached, wherein:

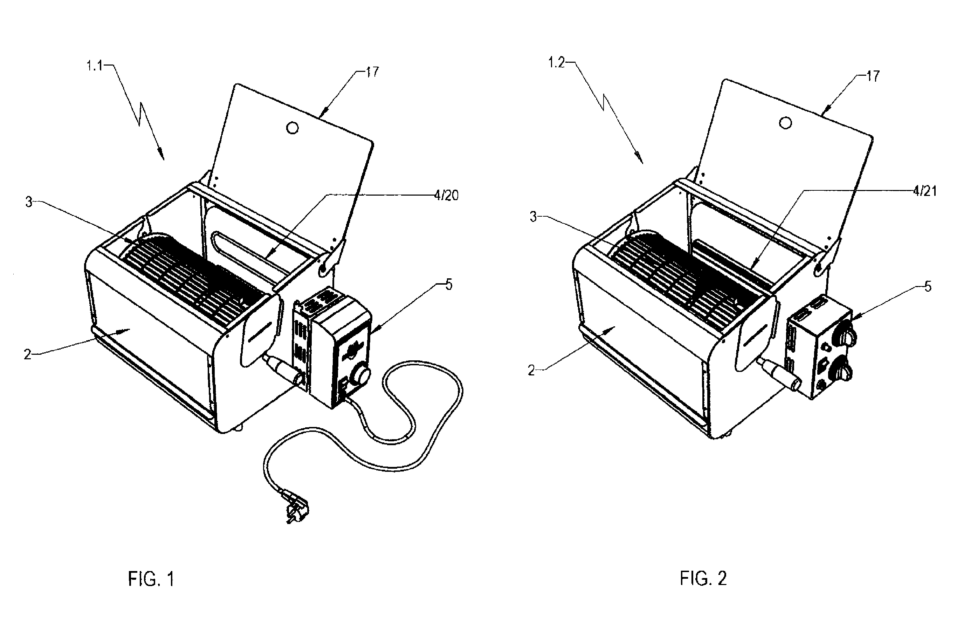

- Figures 1-2 respectively represent two different embodiments of the apparatus subject of the finding, powered by electricity or gas.
- Figures 3-4 represent two perspective views of the apparatus of figure 1;
- Figures 5-6 respectively represent a perspective view and an elevation view, sectioned according to line VI-VI of fig. 5.
- Fig. 7 represents an exploded perspective view of the apparatus of fig. 1;
- Figures 8-9 represent an embodiment with two ovens, one arranged over the other, of the apparatus of figures 1 and 2;
- Figures 10-11 represent two perspective views, respectively front and rear, of an apparatus subject of the finding, of the combustion type;
- Figures 12-14 represent two views, respectively elevation and perspective, of the apparatus of fig. 10, during use on a fireplace.

As observable in the figures, the cooking apparatus, indicated in its entirety by 1, comprises a box-shaped structure 2, arranged within which is a basket 3 with perforated walls, slowly rotating around its longitudinal axis and holding the food to be cooked, as well as a heat generator 4; said two components are arranged mutually adjacent and enclosed in such a manner to define a space similar to a normal cooking oven.

The slow rotation of the basket and the supply of the source of heat are regulated by a control unit 5 arranged outside the structure and easily accessible to the user.

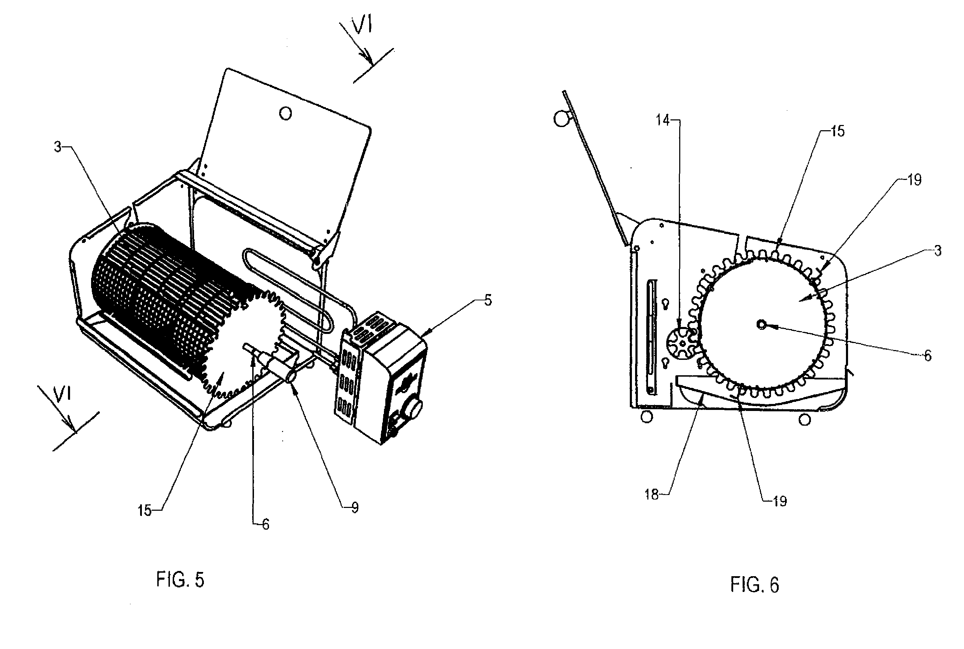

The basket 3 is made up of a cylindrical casing made of a perforated sheet or a net, provided with a central rod 6 (fig. 5) which, extending laterally, is engaged onto the slits 7, provided on two side walls 8 of the box-shaped structure 2 and projects beyond the abovementioned walls, for allowing fixing of the handle knobs 9.

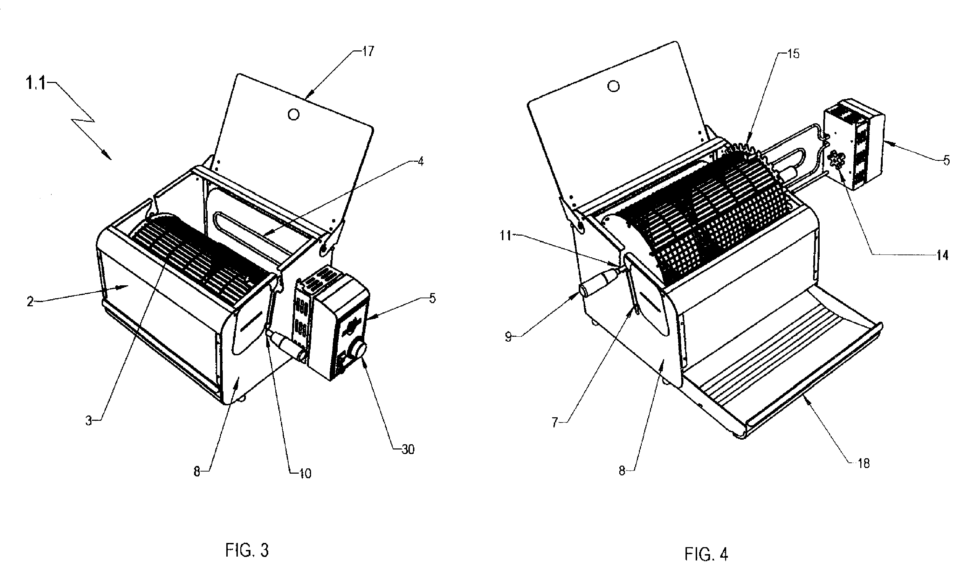

As observable in figures 3 and 4, provided on the two side slits 7 are at least two different support points 10 and 11 for the rod 6, in such a manner to be able to position the basket in at least two different positions, which are more or less distant from the adjacent source of heat 4, depending on the different cooking conditions (more or less amount of heat required).

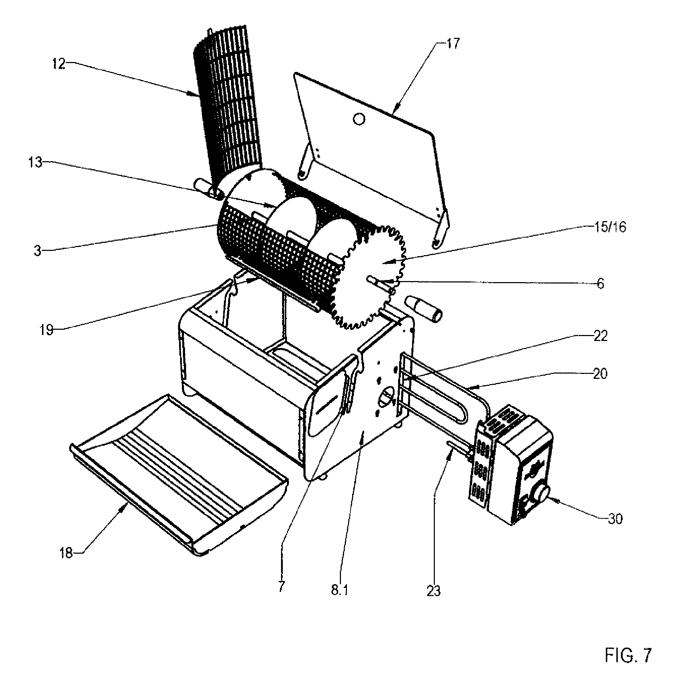

As observable in figure 7, the basket 3 is provided with a liftable portion 12 thereof serving as a door for loading the products and the internal volume of said basket is partitioned into compartments, through the insertion of partitioning plates 13, fitted into the central rod 6 and sliding in such a manner to vary, when required, the volume of the single compartments or for cooking different type of food.

The basket 3 is slowly rotated in an alternating manner by the motion transmitted by a pinion 14, projecting from the control unit 5 and driven by a geared motor held in the abovementioned control unit 5, which is engaged by a toothed wheel 15, integral with the rod 6 and advantageously provided on one of the two side walls 16 of the basket itself.

The box-shaped structure 2 is closed on the upper part by an openable door 17, preferably made of transparent material in such a manner that the user can see through to check the cooking progress at any time and it is provided at the lower part with a an extractable tray 18, used for the collection of the percolate generated by the food products being cooked.

Advantageously, the extractable tray 18 (see fig. 6) has a concave section in such a manner to be able to convey even the least amount of percolate or condiment into the central zone.

A further purpose of the tray 18 is that of being able to hold - in its cavity - oil or other types of condiments which, through collectors 19 radially projecting from the basket 3, are collected in small amounts and poured subsequently on the upper part of the product being cooked (see fig. 6).

The source of heat can be made up of a coiled electric resistor 20 or by at least one gas burner pipe 21; both are to be fitted into the oven through a slit 22 provided on the side wall 8.1 and fixed on which is the control unit 5 provided with a heat sensor 23, which is fitted, through the abovementioned slit, into the oven itself.

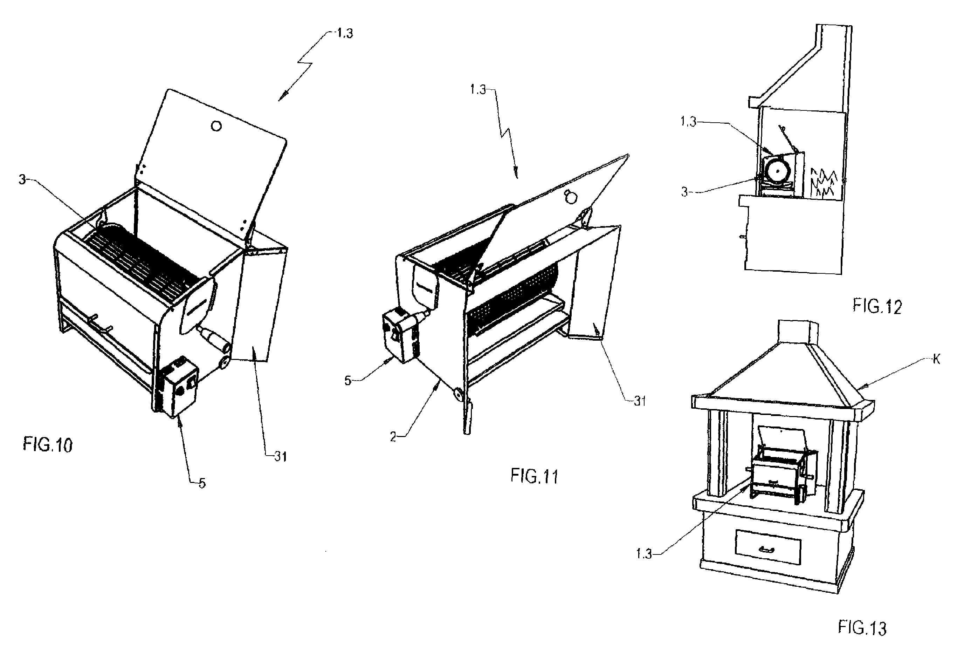

As observable in figures 10-13, a further cooking method uses heat generated by a fireplace, in which the cooking apparatus 1.3 is positioned in such a manner that its rotating perforated basket 3, is heated by the combustion heat.

In such cooking oven 1.3, the rear part of the box-shaped structure 2 has an inlet 31 for channelling the heat towards the cooking zone.

Furthermore, as observable in fig. 13, such cooking apparatus 1.3, due to its small size, can be used in the common domestic fireplaces "K".

As observable in the exploded figures, the entire apparatus 1 is completely, easily and quickly dismountable in its single components, thus allowing performing a thorough cleaning of all its parts (see fig. 7).

In particular, the control electric components form a single block, which is rapidly detached from the structure of the oven.

Operatively, the entire basket 3 is easily extractable by removing it from the two side slits 7, in such a manner to be filled more easily and it is also completely dismountable, in such a manner to be able to put all the single parts (basket, door, partitioning plates and central rod), into a dishwasher - even of the domestic type - alongside the lower tray and upper door.

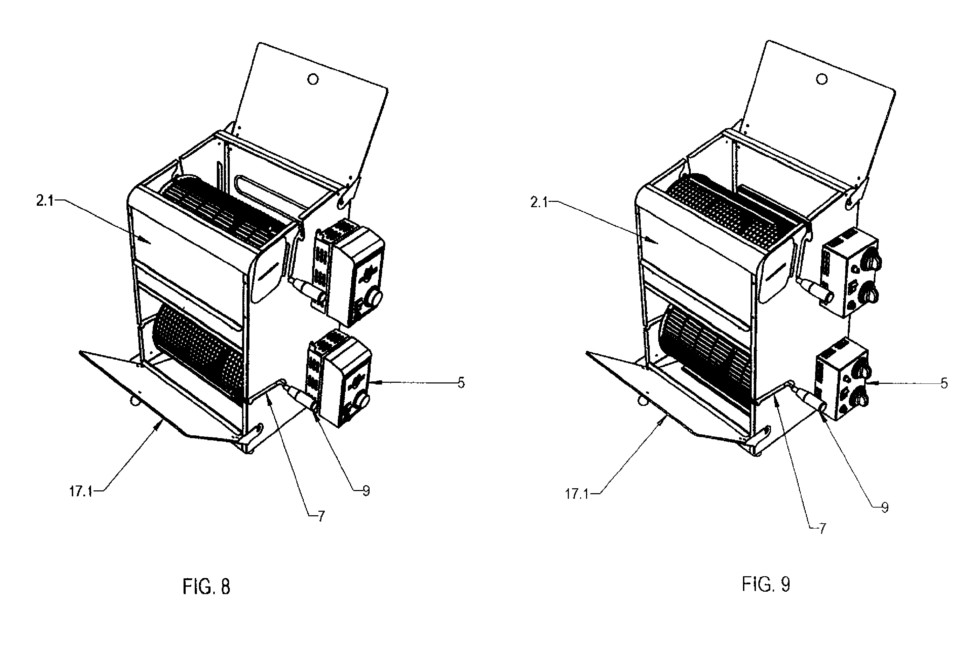

Furthermore, it is provided that, as a variant of the embodiment described above, the openable door 17.1 be arranged on the front part of the box-shaped structure 2.1, in such a manner to allow providing a cooking apparatus made up of two or more ovens mutually arranged over each other (figures 8 and 9).

According to the points outlined above the objectives of the finding were attained in that, in practice, the user should only fit the portions of food to be cooked into the respective compartments, close the apparatus and set, through the buttons 30 of the control unit, the rotation velocity of the basket and the heat power of the source of heat.

In practice, use of the cooking apparatus subject of the finding attains a high cooking capacity with extremely low heat energy consumption (for example up to 7 kg of meat can be cooked at 1.8 KW, for about two hours).

Obviously, there are other embodiments even considerably different from the one described, depending on the components employed, without for this reason departing from the scope of the following claims.

## Claims

1. FOOD COOKING APPARATUS, of the type similar to the "rotisserie" and to the "rotating-spit", for domestic and professional use, said apparatus being **characterised in that** the products to be cooked are arranged inside the basket (3) with perforated walls, rotating around its longitudinal axis, arranged opposite a source of heat (4), both the abovementioned components being arranged inside a box-shaped structure (2), which delimits the cooking oven and regulated through a control unit (5) arranged outside said structure.

2. APPARATUS, according to claim 1, **characterised in that** the basket (3) is prism-shaped.

3. APPARATUS, according to claim 1, **characterised in that** the source of heat is made up of an electric resistor (20).

4. APPARATUS, according to claim 1, **characterised in that** the source of heat is made up of a gas burner (21).

5. APPARATUS, according to claim 1, **characterised in that** the source of heat is made up of a hearth oven with a fireplace arranged in contact with the rotating perforated basket (3).

6. APPARATUS, according to one or more of the preceding claims, **characterised in that** the basket (3) is completely extractable from the machine, during the steps of loading and removal of the product and it is provided with an alternating rotating movement, when cooking.

7. APPARATUS, according to one or more of the preceding claims, **characterised in that** the basket (3) is completely dismountable in all its components and it has an electric group formed by a single block quickly separable from the other elements, in such a manner to allow the required cleaning and washing operations on all the components of the apparatus.

8. APPARATUS, according to claim 1 and one or more of the subsequent claims, **characterised in that** the basket (3) is made up of a net-like casing provided with a central rod (6) which, extending laterally, is engaged into the slits (7), made on two side walls (8) of the box-shaped structure (2) and projects beyond the abovementioned walls, to allow fixing the handle knobs (9).

9. APPARATUS, according to claim 8, **characterised in that** provided on the two side slits (7) are at least two different support points (10, 11) for the rod (6), in such a manner to be able to position the basket (3) at at least two different positions with respect to the source of heat (4).

10. APPARATUS, according to claim 1, **characterised in that** the space inside the basket (3) is partitioned into compartments by inserting partitioning plates (13) fitted into the central rod (6), said plates also sliding on said rod, in such a manner to allow varying the volume of the single compartments.

11. APPARATUS, according to claim 8, **characterised in that** the basket (3) is slowly rotated in an alternating manner by the motion transmitted by a pinion (14), projecting from a control unit (5), which is engaged by a toothed wheel (15), integral with the rod (6) and provided on one of the two side walls (16) of the basket (3).

12. APPARATUS, according to one or more of the preceding claims, **characterised in that** the sources of heat (20, 21) are fitted into the oven through a slit (22) provided on the side wall (8.1).

13. APPARATUS, according to claim 11, **characterised in that** the control unit (5), fixed onto the wall (8.1), is provided with a heat sensor (23), which is fitted, through a slit (22) into the oven.

14. APPARATUS, according to one or more of the preceding claims, **characterised in that** the box-shaped structure (2) is provided on the lower part with an extractable tray (18), which has a concave section in such a way to collect the percolate in the best way possible and accumulate even the least amount of oil or condiment in a small space.

15. APPARATUS, according to one or more of the preceding claims, **characterised in that** fixed on the external wall of the basket (3) are collectors (19) radially projecting in such a manner that, upon the rotation of the abovementioned container, they touch the bottom of the concave tray (18), collecting a small amount of oil or other condiment deposited on the abovementioned tray, and pour it subsequently on the upper part of the product being cooked.
